Europäisches Patentamt

European Patent Office

Office européen des brevets

(11) Veröffentlichungsnummer: **0 149 851**
**A2**

(12) **EUROPÄISCHE PATENTANMELDUNG**

(21) Anmeldenummer: 84116396.7

(22) Anmeldetag: 27.12.84

(51) Int. Cl.⁴: **G 03 B 27/62**

(30) Priorität: 11.01.84 CH 132/84

(43) Veröffentlichungstag der Anmeldung:
31.07.85 Patentblatt 85/31

(84) Benannte Vertragsstaaten:
AT BE DE FR GB IT NL SE

(71) Anmelder: MERCHANDISING INTERNATIONAL S.A.
1, rue Pédro-Meylan
CH-1211 Genf 17(CH)

(72) Erfinder: Grossman, Walter, Dr.
Wettsteinstrasse 59
CH-8332 Russikon(CH)

(74) Vertreter: Patentanwälte Beetz sen. - Beetz jun. Timpe -
Siegfried - Schmitt-Fumian
Steinsdorfstrasse 10
D-8000 München 22(DE)

(54) Vorrichtung zur Negativpositionierung bei Colorprintern sowie Verfahren zu deren Betrieb.

(57) Das von der Bedienungsperson im Bildfenster (2) mittels des Handrads (11) positionierte erste Negativ des Films wird durch die Vorrichtung zum Kopierfenster (1) vorgeschoben. Dieses ist vom Bildfenster um eine Strecke entfernt die ein ganzzahliges Vielfaches des normalen Negativabstands beträgt. Durch eine Messeinrichtung (5,6,7) wird festgestellt, ob sich bei jedem Vorschub der Filmsteg wieder in gleicher Position beim Bildfenster befindet. Ist dies der Fall, erfolgt der nächste Vorschub, ist dies nicht der Fall, wird dies mittels eines optischen und/oder akustischen Alarms der Bedienungsperson mitgeteilt. Die Messeinrichtung kann während des Vorschubs die Negativdichte messen und Korrektursignale an die Belichtungssteuerung des Printers abgeben. Durch die Vorrichtung ist es möglich auch bei kleinen Printern für Einzelfilme einen weitgehend automatisierten Betrieb zu erreichen.

Fig. 1

Vorrichtung zur Negativpositionierung bei Color-
Printern sowie Verfahren zu deren Betrieb
-------------------------------------------------

Die Erfindung betrifft eine Vorrichtung zur Positionierung der Negative einzelner Kleinbildfilme im Kopierfenster
eines Printers, mit einer Vorschubführung für 36 mm-Filme mit
beidseitigen Führungsleisten, einem Bildfenster für die visuelle Positionierung des ersten Negativs des Films, einem
Kopierfenster, in dem die zu kopierenden Negative während des
Kopiervorgangs positioniert werden und einem Vorschubmechanismus sowie ein Verfahren zu deren Betrieb.

Im Gegensatz zu den erst nach 1960 eingeführten Filmformaten
126 und 110 existiert bei dem sogenannten Kleinbildfilm, der
aus dem 36 mm Kinofilm abgeleitet ist, keine feste Zuordnung
der Negativposition zur Perforation oder zum Filmanfang. Das
heisst aber auch, dass die einfache Art der automatischen Positionierung im Kopierfenster eines Printers, wie sie bei den
Formaten 110 und 126 erfolgen kann, beim Kleinbildfilm nicht
möglich ist. Für moderne Hochleistungsprinter wurden daher
Vorbereitungsgeräte entwickelt, sogenannte Filmkerber, die den
Film optisch entlang der Vorschubrichtung auf mehreren Pisten
abtasten, und dann aus den so gewonnenen Daten mit Hilfe komplexer Algorithmen die wahrscheinlichste Lage der einzelnen Negative berechnen und diese Lagen auf dem Film durch eingestanzte Kerben festlegen. Dabei sind zwei Hauptprobleme zu lösen:

No. 43 308

1. Die Lage des ersten Negativs nach dem Filmanfang muss zuverlässig ermittelt werden. Oft ist das aus den ermittelten Daten des einzelnen Negativs nicht mit Sicherheit zu erreichen, sodass die Lage mehrerer Negative verglichen wird und aus dem festgestellten Rhythmus mit Hilfe einer Rückwärts-Extrapolation die Lage des ersten Negativs berechnet wird.

2. Obwohl in den meisten Kameras der Vorschub pro Aufnahme durch eine Umdrehung einer Zahntrommel mit 8 Zähnen sehr genau erfolgt, kann es aus verschiedenen Gründen zu einer Abweichung von dem Normalabstand 38 mm (= 8 Perforationslöcher) kommen. Die Perforation kann beschädigt sein, der Film kann der Kamera entnommen und wieder eingesetzt worden sein, ein Vorschub kann nicht vollständig erfolgt sein u.s.w., solche Vorfälle sind möglich und erfordern deshalb eine ständige Kontrolle des einmal festgestellten Vorschubschrittes, da sonst der Ausschuss der Printer zu gross sein würde.

Es wäre ideal, wenn auch auf kleineren Printern, auf denen die Filme nicht als ganze Rollen, sondern als Einzelfilme verarbeitet werden, das Kopieren eines Films automatisch erfolgen könnte. Dies ist besonders vorteilhaft, wenn auch die Belichtungsbestimmung vollautomatisch mit Hilfe einer sog. Scanning-Vorrichtung vorgenommen wird. Wenn jedes einzelne Negativ durch die Bedienungsperson beurteilt werden muss, um Korrekturen der Belichtung einzutasten, bringt der automatische Vorschub nur wenig Vorteile.

Das Ziel der vorliegenden Erfindung besteht deshalb darin, eine Vorrichtung zu schaffen für die automatische Negativpositionierung bei derartigen Printern.

Dies wird dadurch erreicht, dass das Bildfenster in einem festen, durch den Normalabstand zweier Negative teilbaren Abstand vom Kopierfenster angeordnet ist und eine im Bereich des Bildfensters angeordnete Messeinrichtung, zur Erkennung der Transparenz eines Filmabschnitts sowie eine Steuereinrichtung zur Steuerung des Vorschubs, der Kopierbelichtung und Auslösung eines akustischen und/oder optischen Alarms in Abhängigkeit von Messwerten der Messeinrichtung vorgesehen ist.

Ferner ist es ein Ziel der Erfindung ein Verfahren zum Betrieb der Vorrichtung zu zeigen. Dies besteht darin, dass das erste zu kopierende Negativ eines Kleinbildfilms von einer Bedienungsperson im Bildfenster positioniert wird, durch mindestens eine Fotozelle der Messeinrichtung nach dem Positionieren des ersten Negativs die Transparenz des Filmstegs gemessen wird, dass diese Messwerte gespeichert werden und dass nach jedem Vorschub in der Normlänge von 38 mm diese Messung wiederholt wird und die neuen Messwerte mit den erstmals gespeicherten Werten verglichen werden, wobei die Kopierbelichtung für ein Negativ nur ausgelöst wird, sofern die Differenz der verglichenen Werte innerhalb eines festgelegten Toleranzbereichs liegt und bei Ueberschreiten dieses Bereichs ein akustischer und/oder optischer Alarm ausgelöst wird.

Da an kleineren Printern jeder einzelne Film in das Kopiersystem eingelegt werden muss, kann die Bedienungsperson das erste Negativ in einem dafürvorgesehenen Feld positionieren. Die Vorrichtung muss daher nicht in der Lage sein, die Position des ersten zu kopierenden Negativs zu bestimmen. Nach dieser Positionierung kann dann ein Startknopf gedrückt werden, worauf der ganze Film bis zum letzten Negativ durchkopiert wird. Der Transport erfolgt mit einem Normalvorschub von 38 mm (= 8 Perforationslöcher). Da bei den Printern dieser Art eine Bedienungsperson immer in der Nähe ist, muss das Vorschub-überwachungs-System nicht in der Lage sein, Fehler selbst zu korrigieren. Nach einem Vorschub wird lediglich kontrolliert, ob sich an der gleichen Stelle, wo vorher ein Filmsteg war, wieder ein Filmsteg befindet. Ist dies der Fall, so wird der Kopiervorgang fortgesetzt; ist eine Bildstelle an der Position des Filmstegs, so ertönt ein akustischer Alarm und der Kopiervorgang wird unterbrochen. Die Bedienungsperson kann dann erneut ein Negativ genau positionieren und den Kopiervorgang starten. Da über 90% der Filme keine Abweichung vom Normvorschub aufweisen, ist auf diese Weise eine automatische Kopie der meisten Kleinbildfilme möglich.

Bei einer besonderen Ausführungsart bestimmt die Messeinrichtung nicht nur eine ev. notwendige Dichte und/oder Farbkorrektur, sondern stellt auch fest, ob auf einem Negativfeld ein kopierfähiges Bild vorhanden ist. Dazu wird der Unterschied zwischen der Minimaldichte und der Maximaldichte eines Negativs bestimmt. Liegt dieser Wert unterhalb einer einstellbaren Schwelle, so wird angenommen, dass keine genügende Bildinformation im Negativ enthalten ist. In einem solchen Fall wird keine Kopie gemacht, sondern der Film sogleich auf die nächste Negativposition vorgeschoben.

Da die nachstehend im Einzelnen beschriebene Vorrichtung zur automatischen Kopie von Kleinbildfilmen auch zur Nachrüstung von bestehenden Printern vorgesehen ist, wird bei einer besonderen Ausführungsart von der Messeinrichtung lediglich ein Korrektursignal geliefert, das die normalerweise von der Bedienungsperson gemachten Korrekturen ersetzt. Ausserdem ist die Vorrichtung von relativ kleiner Ausdehnung, damit sie bei einer weiteren Ausführungsart auf einem Drehteller angeordnet werden kann. Diese Anordnung ermöglicht die Kopie des rechteckigen Negativs sowohl längs, als auch quer zur Papierbahn.

Im folgenden wird ein Ausführungsbeispiel der Erfindung anhand der Figuren näher beschrieben. Darin zeigen

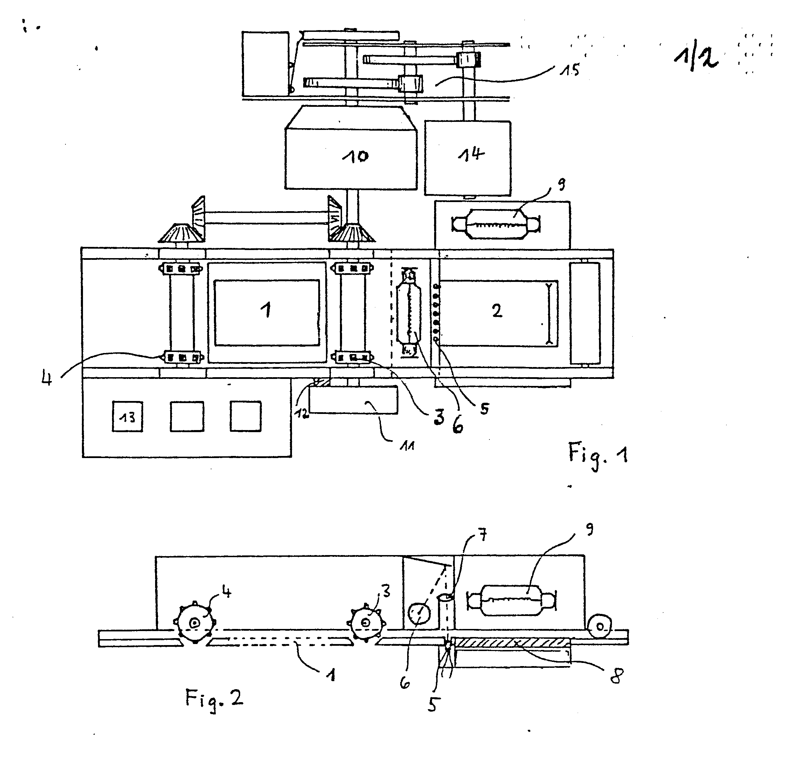

Figur 1 eine schematische Aufsicht der Vorrichtung,

Figur 2 eine Seitenansicht und

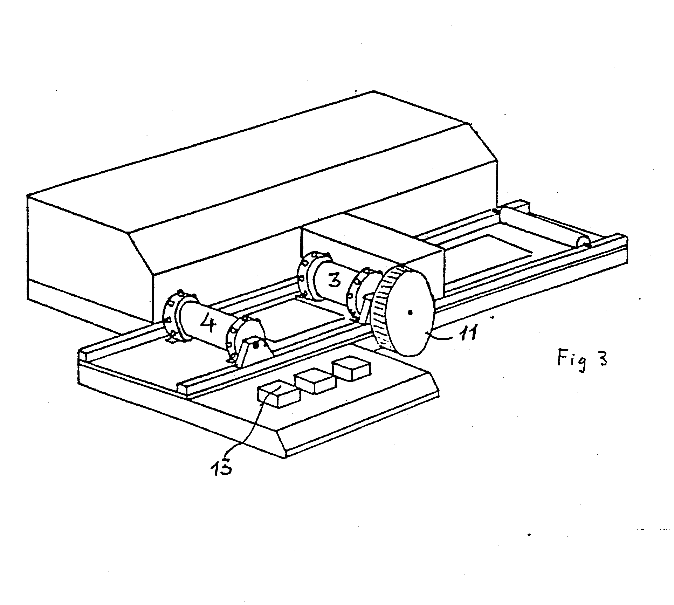

Figur 3 eine perspektivische Ansicht der Vorrichtung.

Das Kopierfenster 1 ist vom Vorpositionierungsfeld 2 soweit entfernt, dass ein Negativ dazwischen Platz findet. Der Film wird von rechts soweit eingeführt, dass sich das erste Negativ im Fenster 2 befindet. Dadurch wird auch der Filmanfang von der Zahntrommel 3 erfasst, die mit einer weiteren Zahntrommel 4 so verbunden ist, dass sich beide Trommeln synchron drehen und dass der gespannte Film mit seiner Perforation so mit beiden Zahntrommeln im exakten Eingriff ist. An der Stelle des dem in Position gebrachten ersten Negativ vorausgehenden Bildstegs befindet sich eine Reihe von mehreren Photodioden 5, die in dieser Ausführung direkt oberhalb des Films angebracht ist. Von unten wird diese Reihe durch eine Soffittenlampe 6 und eine Zylinderlinse 7 beleuchtet. Jede Diode misst die Filmtransparenz entlang einer der parallelen Pisten längs des Films. Unter dem Bildfenster 2 befindet sich eine Diffusionsscheibe (z.B. Opalglas) 8, die von einer Lampe 9 ausgeleuchtet wird. Diese helle Unterlage erlaubt eine genaue Positionierung des ersten Negativs. Die Diffusorscheibe ist etwas länger als das Negativ, sodass der Bildsteg zwischen dem ersten und dem zweiten Negativ mit einem auf der Scheibe angebrachten Positionierungsstrich zur Deckung gebracht werden kann.

Während des Einschiebens des Films ist die Magnetkupplung 10 stromlos, sodass die Positonierung mit dem auf der Achse der Zahntrommel 3 liegenden Rändelrad 11 vorgenommen werden kann. Die Vorschubvorrichtung ist leicht gebremst durch ein auf der Rückseite der Rändelscheibe aufgelegtes Bremselement 12 , das durch leichten Federdruck den Film in der einmal eingestellten Position festhält.

Nach der Positionierung wird der Startknopf 13 gedrückt, der den Kopiervorgang einleitet. Folgende Schritte laufen dann in der hier beschriebenen Reihenfolge ab:

1. Die Photodioden messen die Transparenz an der dem ersten Negativ unmittelbar vorausgehenden unbelichteten Filmstelle. Die Werte werden in logarithmische Werte (Dichtewerte) umgewandelt und in einem Halbleiterspeicher abgelegt.

2. Der Motor 14 macht genau eine Umdrehung, die über die jetzt stromführende Kupplung 10 auf die Zahntrommel übertragen wird. Falls die Zahntrommel nicht, wie hier angenommen, 8 Zähne auf ihrem Umfang hat, müsste selbstverständlich die Umdrehung so angepasst werden, dass exakt eine Negativ-Normlänge vorgeschoben wird.

3. Während des Vorschubs messen die Photodioden nach jeweils wenigen Vorschubmillimetern die Negativdichte aus, um daraus das Korrektursignal für den Printer abzuleiten.

4. Am Ende des Vorschubes wird die errechnete Belichtungskorrektur gespeichert.

5. Wenn der Film stillsteht, wird die Transparenz des Filmstegs von der Diodenreihe gemessen und mit den anlässlich der ersten Messung gespeicherten Werten verglichen. So-

- 8 -                                    0149851

fern die neuen Werte die gespeicherten Werte um nicht mehr
als einen festgelegten Toleranzbetrag überschreiten, wird
der Film erneut um einen Normabstand vorgeschoben. Es spielen sich erneut die Vorgänge gemäss den Schritten 2 bis
4 ab.

6. Erst jetzt befindet sich das zuerst gemessene Negativ im
Kopierfenster[1]. Sofern bei der Ausmessung des Negativs
eine genügende Modulation (= Dichtedifferenz zwischen
dunklen und hellen Stellen) festgestellt worden ist, wird
der Befehl zur Belichtung erteilt. Der Printer belichtet
das Negativ auf Grund der durch das konventionelle Ganzfeldsystems festgelegten Belichtungsdaten, korrigiert
durch die von der Messeinrichtung ermittelten Korrekturwerte. Anschliessend wird das Papier im Printer um eine
Formatlänge vorgeschoben.

7. Bei stehendem Film wird wieder die Transparenz des Bildstegs mit den anfänglich gespeicherten Werten verglichen.
Liegt die Transparenz im festgelegten Toleranzbereich,
so folgen erneut die Vorgänge entsprechend den Schritten
2 bis 6. Wird die Dichte des Toleranzbereiches von einer
festgelegten Zahl von Photodioden, z.B. mindestens zwei,
als überschritten gemeldet, so erfolgt ein akustischer
Alarm und der Kopiervorgang hält an, nachdem das im Kopierfenster positionierte Bild noch kopiert worden ist.

8. In diesem Fall muss die Bedienungsperson eingreifen, den
Film um ein Negativ zurückziehen und erneut den Startknopf drücken.

Je nach Art der Bildabstands-Störung kann auf verschiedene Arten weitergearbeitet werden:

1. Bei einer einmaligen Abweichung genügt ein erneutes Positionieren auf die neue Stellung um den Kopiervorgang automatisch fortzusetzen.

2. Falls die Bildstege eine zu hohe Dichte infolge von Filmschleier oder von Ueberstrahlungen durch stark überbelichtete Negative aufweisen, der Bildabstand aber nach Ueberprüfung durch die Bedienungsperson für den Rest des Filmes regelmässig bleibt, so kann durch Drücken einer Taste die Unterbrechung auf Grund zu hcher Filmsteg-Dichten ausgeschaltet werden. Der Film wird dann nach jeder Belichtung um einen Normalschaltschritt vorwärts transportiert, ohne dass eine Kontrolle der Positionierung erfolgt.

3. Bei grosser Unregelmässigkeit der Negativlage kann die gesamte Automatik,inklusive Messeinrichtung ausgeschaltet werden und jedes Negativ einzeln positioniert und kopiert werden. Dabei müssen die Dichtekorrekturen ebenfalls manuell vorgenommen werden.

Die hier beschriebene Vorrichtung erlaubt den Ausbau einfacher Printer zu automatischen Printern mit Zuführung einzelner Filme. Da jeder Film nur am Anfang eingeführt und positioniert werden muss, kann eine Bedienungsperson entweder mehrere Printer bedienen oder in der Zwischenzeit andere Laborarbeiten verrichten.

- 1 -

0149851

Patentansprüche
------------------------------

1. Vorrichtung zur Positionierung der Negative
einzelner Kleinbildfilme im Kopierfenster eines Printers,
mit einer Vorschubführung für 36 mm-Filme mit beidseitigen Führungsleisten, einem Bildfenster für die visuelle
Positionierung des ersten Negativs des Films, einem Kopierfenster, in dem die zu kopierenden Negative während
des Kopiervorgangs positioniert werden und einem Vorschubmechanismus, dadurch gekennzeichnet, dass das Bildfenster
(2) in einem festen, durch den Normalabstand zweier Negative teilbaren Abstand vom Kopierfenster (1) angeordnet
ist und eine im Bereich des Bildfensters angeordnete
Messeinrichtung (5,6,7) zur Erkennung der Transparenz
eines Filmabschnitts sowie eine Steuereinrichtung zur
Steuerung des Vorschubs, der Kopierbelichtung und Auslösung eines akustischen und/oder optischen Alarms in
Abhängigkeit von Messwerten der Messeinrichtung vorgesehen ist.

2. Vorrichtung nach Anspruch 1, dadurch gekennzeichnet, dass die Messeinrichtung zur Messung der Transparenz der Filmstege, zur Speicherung eines ersten Messwerts und zum Vergleich des ersten Messwerts mit weiteren Messwerten weiterer Filmstege ausgestaltet ist.

3. Vorrichtung nach Anspruch 2, dadurch gekennzeichnet, dass die Steuereinrichtung zur Vorschubsteuerung, wenn die verglichenen Messwerte innerhalb eines wählbaren Toleranzbereichs liegen und zur Alarmauslösung, bei Ueberschreitung des Toleranzbereichs ausgestaltet ist.

4. Vorrichtung nach Anspruch 2, dadurch gekennzeichnet, dass die Messeinrichtung eine Fotozellenreihe quer zum Filmlauf sowie eine Beleuchtungseinrichtung, zur Beleuchtung der Fotozellen durch die Filmebene aufweist.

5. Vorrichtung nach einem der vorangehenden Ansprüche, dadurch gekennzeichnet, dass die Messeinrichtung zur Messung der Negativtransparenz beim Vorschub des Negativs ausgestaltet ist.

6. Vorrichtung nach Anspruch 5, dadurch gekennzeichnet, dass die Messeinrichtung zur Bildung eines Korrektursignals aus den Messwerten ausgestaltet ist.

7. Vorrichtung nach Anspruch 5, dadurch gekennzeichnet, dass die Steuereinrichtung zur Vorschubsteuerung abhängig von den Messwerten der Negativtransparenz ausgestaltet ist.

8. Vorrichtung nach einem der vorstehenden Ansprüche, dadurch gekennzeichnet, dass die Alarmauslösung der Steuereinrichtung abschaltbar ist, wobei der Vorschub unabhängig von der Filmstegerkennung erfolgt.

9. Vorrichtung nach einem der vorangehenden Ansprüche, dadurch gekennzeichnet, dass mindestens die Vorschubführung zur Anordnung auf einem Drehteller ausgestaltet ist, um sowohl längs- wie querliegende Projektion der Negative zu ermöglichen.

10. Verfahren zum Betrieb der Vorrichtung nach Anspruch 1, dadurch gekennzeichnet, dass das erste zu kopierende Negativ eines Kleinbildfilms von einer Bedienungsperson im Bildfenster positioniert wird, durch mindestens eine Fotozelle der Messeinrichtung nach dem Positionieren des ersten Negativs die Transparenz des Filmstegs gemessen wird, dass diese Messwerte gespeichert werden und dass nach jedem Vorschub in der Normlänge von 38 mm diese Messung wiederholt wird und die neuen Messwerte mit den erstmals gespeicherten Werten verglichen werden, wobei die Kopierbelichtung für ein Negativ nur ausgelöst wird, sofern die Differenz der verglichenen Werte innerhalb eines festgelegten Toleranzbereichs liegt und bei Ueberschreiten dieses Bereichs ein akustischer und/oder optischer Alarm ausgelöst wird.

11. Verfahren nach Anspruch 10, dadurch gekennzeichnet, dass eine Photozellenreihe quer zum Filmlauf die Messung der Filmstegtransparenz vornimmt und dass die

- 4 -                                    0149851

Unterbrechung des Kopiervorganges und die Auslösung des Alarms dann erfolgt, wenn mindestens zwei Photozellen eine Ueberschreitung des Toleranzbereichs feststellen.

12. Verfahren nach Anspruch 11, dadurch gekennzeichnet, dass die Photozellen, die die Transparenz des Filmstegs kontrollieren, während des Vorschubs in kurzen Abständen die Transparenz des zu kopierenden Negativs messen, und dass aus diesen Messwerten ein Korrektursignal abgeleitet wird, welches zur Korrektur der grossflächigen Messung des Color Printers verwendbar ist.

13. Verfahren nach Anspruch 12, dadurch gekennzeichnet, dass die Photozellen entlang des vorgeschobenen Negativs die Dichtewerte erfassen, dass die Maximum- und Minimum-Werte gespeichert werden und dass ohne Kopie des betreffenden Negativs sofort ein weiterer Vorschub erfolgt, sofern die Differenz von . Maximum und Minimum in einem definierten Teilbereich des Negativs unterhalb einer festgelegten Schwelle liegt.

14. Verfahren nach Anspruch 13, dadurch gekennzeichnet, dass bei Ueberschreiten der Transparenz-Toleranzwerte eines oder mehrerer Filmstege die Kontrollfunktion der optischen Filmstegüberwachung ausgeschaltet wird, die weiteren Transportschritte ungeachtet der Messergebnisse im Normalschaltschritt erfolgen und der Kopiervorgang jedesmal freigegeben wird, sofern dies nicht durch die Messung ungenügender Differenz der Dichtewerte verhindert wird.

Fig. 1

Fig. 2

2/2
0149851

Fig 3